# EUROPÄISCHE PATENTSCHRIFT

(11) **EP 0 842 406 B1**
(45) Veröffentlichungstag und Bekanntmachung des Hinweises auf die Patenterteilung: **06.03.2002**
(21) Anmeldenummer: 96914159.7
(22) Anmeldetag: 30.04.1996
(51) Int. Cl.: G01L 15/00

(54) **DRUCKMESSVORRICHTUNG**
PRESSURE GAUGE
MANOMETRE

(30) Priorität: 16.06.1995 DE 19521832
(43) Veröffentlichungstag der Anmeldung: 20.05.1998
(73) Patentinhaber: ROBERT BOSCH GMBH, 70442 Stuttgart (DE)
(72) Erfinder: WILLIG, Rainer, D-71732 Tamm (DE)
(86) Internationale Anmeldenummer: EP9601807
(87) Internationale Veröffentlichungsnummer: WO9700433

(56) Entgegenhaltungen:
- WO-A-94/17383
- US-A- 3 930 412
- US-A- 4 442 716
- PATENT ABSTRACTS OF JAPAN vol. 16, no. 276 (P-1374), 19.Juni 1992 & JP,A,40 007234 (NIPPODENSO CO. LTD.), 6.März 1992,

## Beschreibung

### Stand der Technik

Die Erfindung betrifft eine Vorrichtung zum Messen mehrerer Fluiddrücke nach der Gattung des Anspruchs 1. Sie ist insbesondere zum Anbringen an einem Hydraulikblock vorgeschen, der zum hydraulischen Steuern einer Fahrzeugbremsanlage dient, vorgesehen.

Es ist bei hydraulischen Fremdkraft-Bremsanlagen, die mit einer elektrisch angetriebenen Hydropumpe zur Bremsdruckerzeugung ausgestattet sind, notwendig, den Bremsflüssigkeitsdruck in Radbremszylindern und an weiteren Stellen der Bremsanlage, beispielsweise in einem Hauptbremszylinder oder einem Hydrospeicher zu messen. Die gemessenen Drücke werden in elektrische Signale umgesetzt und einem elektronischen Steuergerät zugeleitet, das die Fahrzeugbremsanlage steuert oder regelt.

Es ist bekannt, den Bremsflüssigkeitsdruck an den verschiedenen Stellen der Bremsanlage mit je einem Drucksensor zu messen, der an der jeweiligen Stelle oder zentral am Hydraulikblock angebracht ist und über Hydraulikleitungen mit den jeweiligen Stellen der Bremsanlage kommuniziert. Dies hat den Nachteil eines großen baulichen Aufwands.

Aus US-A-4,442,716 ist es ferner bekannt, eine Vielzahl von Drucksensoren in parallel verlaufenden Reihen in gleichmäßigen Abständen nebeneinander in einer gemeinsamen baulichen Einheit anzuordnen.

### Vorteile der Erfindung

Die erfindungsgemäße Druckmeßvorrichtung mit den Merkmalen des Anspruchs 1 weist eine Sensorenplatte mit mehreren Meßmembranen zur Messung unterschiedlicher Drücke auf. Sie ist insbesondere für hydraulische Fahrzeugbremsanlagen vorgesehen, läßt sich allerdings ebensogut zur Messung von Drücken beliebiger Fluide verwenden. Die Meßmembranen sind gleichmäßig verteilt nach Art einer Matrix auf der Sensorenplatte angeordnet. Sie können sich beispielsweise an Ecken gedachter, gleichseitiger Dreiecke (Dreiecksmatrix) oder Quadrate (Quadratmatrix) oder beispielsweise auch äquidistant verteilt auf einem oder mehreren gedachten, konzentrischen Kreisen befinden.

Befestigungseinrichtungen der Sensorenplatte, also beispielsweise Schraubenlöcher, sind gleichmäßig um jede Meßmembran herum angeordnet, wodurch zugleich einzelne Befestigungseinrichtungen von mehreren Meßmembranen umgeben sind. Jede Meßmembran ist von einer gleichen Anzahl an Befestigungseinrichtungen umgeben, die alle den gleichen Abstand von der jeweiligen Meßmembran haben. So ist beispielsweise bei Anordnung der Meßmembranen und der Befestigungseinrichtungen auf Dreiecks- oder Quadratmatrizen jede Meßmembran in der Mitte eines gedachten gleichseitigen Dreiecks oder Quadrats angeordnet, dessen Ecken von den die Meßmembran umgebenden Befestigungseinrichtungen gebildet werden. Bei äquidistanter Anordnung der Meßmembranen auf einem Kreis wird beispielsweise eine Befestigungseinrichtung in der Mitte des Kreises und eine mit der Anzahl der Meßmembranen übereinstimmende Anzahl an Befestigungseinrichtungen auf einer Mittelhalbierenden zwischen jeweils zwei Meßmembranen auf einem die Meßmembranen umgebenden, konzentrischen Kreis angeordnet, so daß sich jede Meßmembran zwischen je drei Befestigungseinrichtungen befindet.

Die Erfindung hat den Vorteil, daß sich eine benötigte Anzahl an Meßmembranen auf einfache Weise auf einer gemeinsamen Sensorenplatte unterbringen läßt. Montage und Abdichtung der Sensorenplatte beispielsweise an einem Hydraulikblock sind einfach und lassen sich schnell bewerkstelligen, die Herstellung der benötigten Drucksensoren ist preiswert. Die gleichmäßig verteilte Anordnung der Meßmembranen zwischen jeweils einer gleichen Anzahl von Befestigungseinrichtungen bewirkt eine spannungsarme Montage der Sensorenplatte beispielsweise an dem Hydraulikblock. Die Meßmembranen sind nahezu spannungsfrei, was eine Voraussetzung für genaue Messungen mit minimalem Fehler während einer langen Nutzungsdauer ist. Durch die übereinstimmende Anordnung jeder Meßmembran zwischen einer gleichen Anzahl von Befestigungseinrichtungen verformen sich die Meßmembrane bei gleicher Druckbeaufschlagung gleich, so daß jede Meßmembran für gleichen Druck ein gleiches Meßsignal liefert.

Weiterer Vorteil der Erfindung ist, daß die dicht beieinander angeordneten Meßmembranen der Sensorenplatte sowie die gewählte Anordnung der Meßmembranen zueinander eine kurze, elektrische Kontaktierung mit einer zentralen Auswerteschaltung ermöglichen, was ebenfalls die Meßgenauigkeit erhöht. Insbesondere erübrigen sich Steckverbindungen und lange Kabel zwischen den Meßmembranen und der Auswerteschaltung, die durch Korrosion und Alterung zu erhöhten Übergangswiderständen führen können und das Meßergebnis verfälschen.

Die Unteransprüche betreffen vorteilhafte Ausgestaltungen und Weiterbildungen der im Hauptanspruch angegebenen Erfindung.

Zur Messung der Fluiddrücke werden gemäß Anspruch 4 vorzugsweise dehnbare elektrische Widerstände auf der Außen- oder Innenseite jeder Meßmembran angebracht. Diese verformen sich elastisch zusammen mit der Meßmembran durch deren Beaufschlagung mit dem Fluid, dessen Druck gemessen werden soll, und verändern dabei ihren elektrischen Widerstandswert. Diese Widerstandsänderung wird zur Ermittlung des Fluiddrucks herangezogen. Es können beispielsweise Dehnmeßstreifen als dehnbare elektrische Widerstände in Dünnschicht-, Dickschicht- oder Folientechnik auf die Meßmembranen aufgebracht werden.

Zur Verringerung des Meßfehlers werden gemäß Anspruch 5 vier dehnbare, elektrische Widerstände an jeder Meßmembran angebracht und als sog. Vollbrücke (Wheatstone-Brücke) miteinander verschaltet, wodurch sich beispielsweise Widerstandsänderungen durch Temperaturänderungen kompensieren lassen.

Ebenfalls zur Verbesserung des Meßergebnisses dient die Anordnung der vier Vollbrücken-Widerstände gemäß Anspruch 6 der Verbesserung des Meßergebnisses. Es werden je zwei Widerstände in der Mitte einer Meßmembran und die beiden anderen Widerstände einander diametral gegenüberliegend am Umfang der Meßmembran angeordnet. Dies sind die Zonen größter, entgegengesetzt gerichteter, mechanischer Spannungen. Die Dehnungsrichtungen der vier Widerstände verlaufen parallel zueinander und zu einer gedachten Durchmesserlinie durch die beiden am Umfang der Meßmembran angebrachten Widerstände. Jeweils ein äußerer Widerstand ist mit einem mittleren Widerstand in Reihe geschaltet. Durch diese Anordnung der vier Brückenwiderstände ergibt sich eine maximale Druckempfindlichkeit der Brückenschaltung.

Mit einem flächenförmigen Dichtelement gemäß Anspruch 9 mit einstückigen O-Ringen lassen sich die Meßmembranen aufweisende Sacklöcher in der Sensorenplatte mit minimalem Aufwand beispielsweise gegenüber dem Hydraulikblock abdichten. Einander zugewandte Flächen der Sensorenplatte und des Hydraulikblocks brauchen nicht mit Ausnehmungen zum Einlegen von Dichtringen versehen werden. Das flächenförmige Dichtelement dient zur Positionierung der O-Ringe bei der Montage. Es braucht nicht auf der vollen Fläche der Sensorenplatte vorhanden sein, es genügen beispielsweise Stege, die die O-Ringe miteinander verbinden.

### Zeichnung

Die erfindungsgemäße Druckmeßvorrichtung wird nachfolgend anhand zweier in der Zeichnung dargestellter Ausführungsbeispiele näher erläutert. Es zeigen:
- Figur 1: eine runde, geschnitten dargestellte Sensorenplatte gemäß der Erfindung in perspektivischer Darstellung;
- Figur 2: einen vergrößerten Ausschnitt aus Figur 1;
- Figur 3: eine geschnittene, rechteckige Sensorenplatte gemäß einer zweiten Ausführungsform der Erfindung;
- Figur 4: eine Schnittdarstellung einer erfindungsgemäßen Druckmeßvorrichtung;
- Figur 5: eine perspektivische Darstellung der Druckmeßvorrichtung aus Figur 4;
- Figur 6: eine Explosionsdarstellung der Druckmeßvorrichtung aus Figur 4; und
- Figur 7: eine erfindungsgemäße, elektrohydraulische Fahrzeugbremsanlage.

Die Figuren sind in voneinander abweichenden Maßstäben gezeichnet.

Beschreibung der Ausführungsbeispiele

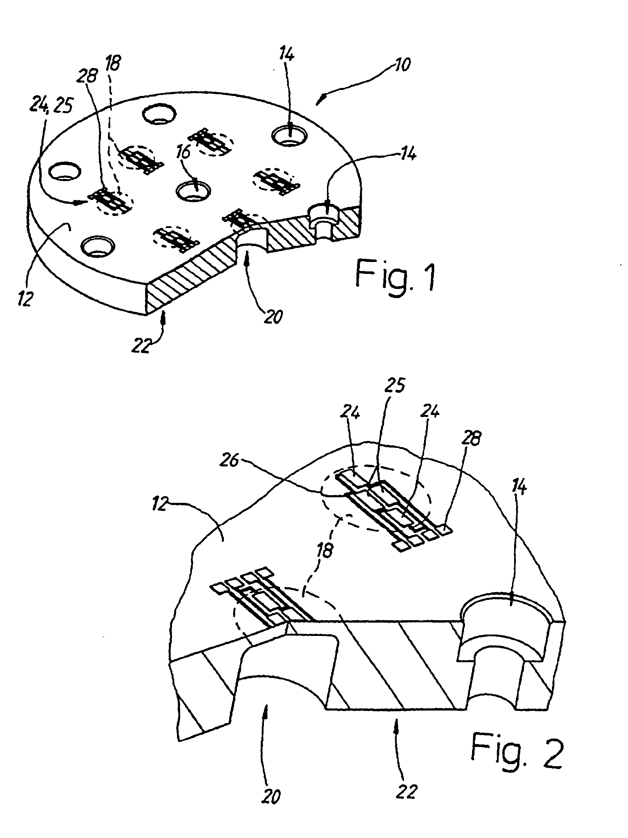

Die in Figur 1 dargestellte, erfindungsgemäße Druckmeßvorrichtung 10 weist eine kreisrunde Sensorenplatte 12 aus Metall auf. Sie kann beispielsweise auch aus Keramik bestehen. Sie weist insgesamt sieben Schraubenlöcher 14, 16 als Befestigungseinrichtungen zum Anbringen der Sensorenplatte 12 an einem anderen Bauteil auf. Eines der Schraubenlöcher 16 befindet sich in der Mitte der Sensorenplatte 12, die übrigen sechs Schraubenlöcher 14 sind äquidistant zueinander randnah am Umfang der Sensorenplatte 12 angeordnet. Die randnahen Schraubenlöcher 14 haben vom mittleren Schraubenloch 16 denselben Abstand wie zu jeweils benachbarten randnahen Schraubenlöchern 14. Im Mittelpunkt eines gedachten Dreiecks, dessen Ecken zwei benachbarte, randnahe Schraubenlöcher 14 und das mittlere Schraubenloch 16 bilden, befindet sich jeweils eine Meßmembran 18. Aufgrund dieser Verteilung der Schraubenlöcher 14, 16 und Meßmembranen 18 auf der Sensorenplatte 12 bleiben die Meßmembranen 18 nahezu spannungsfrei, wenn die Sensorenplatte 12 an einem Bauteil angebracht wird. Eine enentuell trotz dieser spannungsoptimierten Plazierung vorhandene Restspannung wirkt aufgrund der übereinstimmenden Anordnung jeder Meßmembran 18 in der Mitte zwischen drei Schraubenlöchern 14, 16 in jeder Meßmembran 18 gleich. Kleine Meßfehler durch solche Restspannungen sind somit für alle sechs Meßmembranen 18 gleich, bei gleichen Meßwerten herrscht also gleicher Druck an den Meßmembranen 18.

Die Meßmembranen 18 sind einstückig mit der Sensorenplatte 12 (Figur 2), sie sind durch ein Sackloch 20 von einer Befestigungsseite 22 der Sensorenplatte 12 her gebildet, die an einem Bauteil zur Anlage kommt, an dem die Sensorenplatte 12 befestigt wird. Die Sacklöcher 20 können beispielsweise gebohrt, oder, wenn die Sensorenplatte 12 ein Sinterteil ist, beim Sintervorgang gefertigt werden. Eine Stirnwand der Sacklöcher 20 bildet die Meßmembranen 18. Der Membrandurchmesser ist 10 mm. Die Membrandicke beträgt im Ausführungsbeispiel zwischen 0,5 und 1 mm, abhängig vom Druck, zu dessen Messung die erfindungsgemäße Druckmeßvorrichtung verwendet werden soll und vom Berstdruck, den die Meßmembranen 18 auszuhalten haben. Der Meßdruck beträgt im Ausführungsbeispiel bis zu 250 bar, der vorgeschriebene Berstdruck 1200 bar.

Auf jede Meßmembran 18 sind vier Dehnmeßstreifen 24, 25 in Dünnschicht-, Dickschicht- oder Folientechnik aufgebracht, von denen zwei 24 einander diametral gegenüber im Randbereich der Meßmembranen 18 und die beiden anderen 25 nebeneinander in deren Zentrum angeordnet sind. Alle vier Dehnmeßstreifen 24, 25 sind parallel zueinander und mit ihrer Längs- und Dehnrichtung parallel zu einer gedachten Durchmesserlinie durch die beiden am Rand aufgebrachten, Dehnmeßstreifen 24 angeordnet. Bei einer Verformung der Meßmembran 18 durch Druckbeaufschlagung werden die Dehnmeßstreifen 24, 25 gedehnt bzw. gestaucht und ändern ihren elektrischen Widerstand, der zur Ermittlung des Druckes herangezogen wird. Mittels Leiterbahnen 26 sind die Widerstände 24, 25 zu einer Vollbrücke (Wheatstone-Brücke) verschaltet und mit vier Anschlußkontakten 28 elektrisch leitend verbunden.

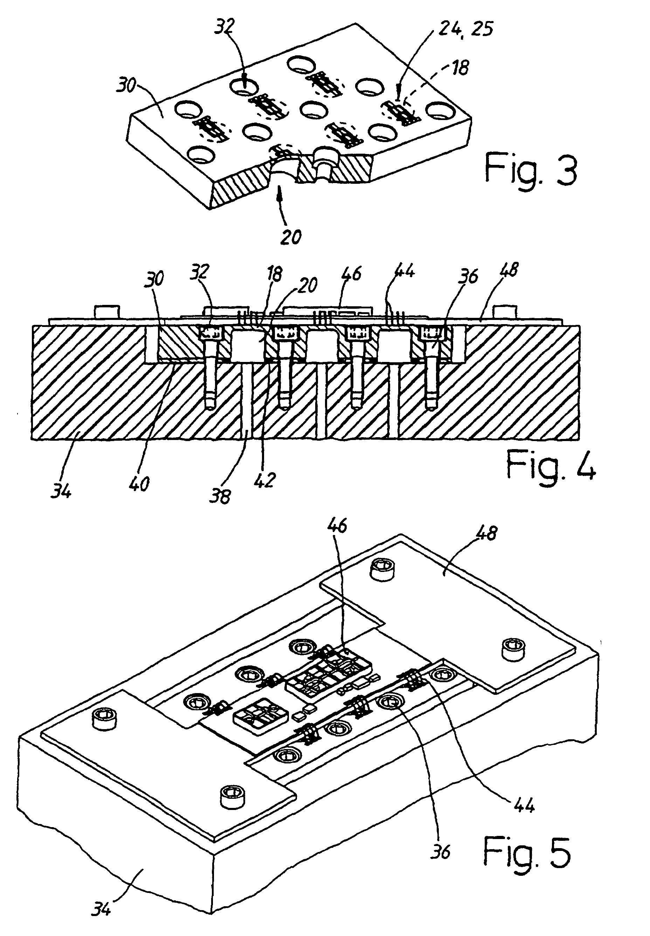

Figur 3 zeigt eine zweite Ausführungsform einer Sensorenplatte 30 einer erfindungsgemäßen Druckmeßvorrichtung. Die Sensorenplatte 30 ist rechteckig, es sind insgesamt sechs Meßmembranen 18 mit aufgebrachten Widerstandsbrücken 24, 25 in zwei Reihen nebeneinander angeordnet, wobei die Reihen um den halben Abstand zweier Meßmembranen 18 gegeneinander versetzt sind, die Meßmembranen 18 befinden sich also "auf Lücke" zu den Meßmembranen 18 der jeweils anderen Reihe. Auf diese Weise hat jede Meßmembran 18 den gleichen Abstand zu den benachbarten Meßmembranen 18, sie befinden sich auf Ecken gedachter, gleichseitiger Dreiecke.

Zwischen und um die sechs Meßmembranen 18 sind Schraubenlöcher 32 nach Art einer Dreiecksmatrix mit gleichseitigen Dreiecken angeordnet. Die Meßmembranen 18 befinden sich also, wie auch bei der runden Sensorenplatte 12, in der Mitte eines gedachten, gleichseitigen Dreiecks, dessen Ecken von drei Schraubenlöchern 32 gebildet werden.

Mit Ausnahme der Form der Sensorenplatte 30 und der Anordnung der Meßmembranen 18 und Schraubenlöcher 32 stimmt diese mit der in Figur 1 dargestellten Sensorenplatte 12 überein und funktioniert in gleicher Weise. Zur Vermeidung von Wiederholungen werden insoweit die Ausführungen zu Figuren 1 und 2 in Bezug genommen. Im folgenden wird die erfindungsgemäße Druckmeßvorrichtung anhand der rechteckigen Sensorenplatte 30 erläutert, die Ausführungen gelten sinngemäß auch für die runde Sensorenplatte 12.

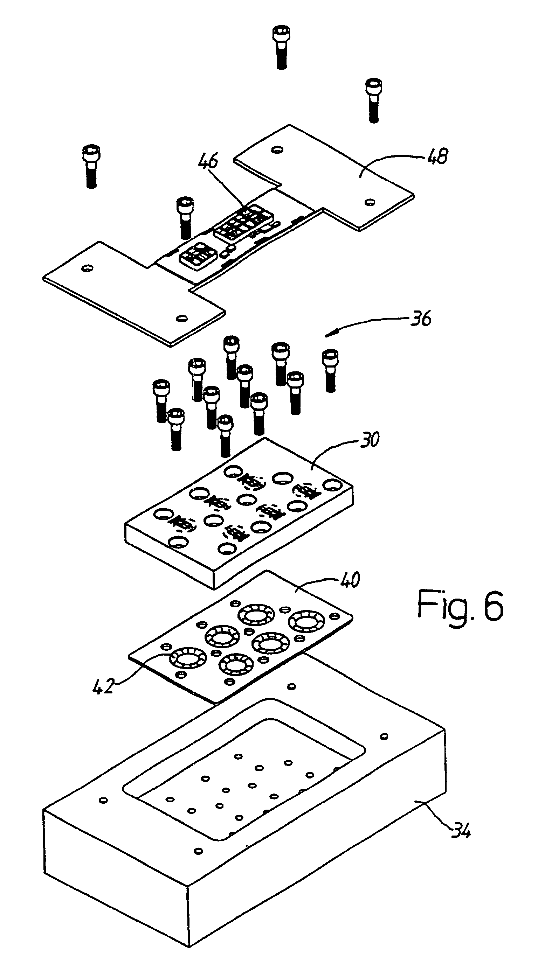

Die Figuren 4 und 5 zeigen eine erfindungsgemäße Druckmeßvorrichtung, bei der die rechteckige Sensorenplatte 30 mit einem Hydraulikblock 34 mittels durch die Schraubenlöcher 32 der Sensorenplatte 30 hindurchgesteckter Schrauben 36 verschraubt ist. Der in Figur 4 dargestellte Schnitt durch die erfindungsgemäße Druckmeßvorrichtung verläuft abwechselnd durch ein Schraubenloch 32 und durch ein Sackloch 20 einer Meßmembran 18, die sich tatsächlich in zwei verschienen Ebenen befinden. Je ein Fluidkanal 38, durch welchen eine Meßmembran 18 mit Fluid beaufschlagbar ist, mündet in eines der Sacklöcher 20. Zur Abdichtung ist eine Dichtplatte 40 zwischen die Sensorenplatte 30 und den Hydraulikblock 34 eingelegt (Figur 6), die mit ihr einstückige O-Ringe 42 aufweist, die sie an den Sacklöchern 20 der Meßmembranen 18 positioniert. Bei nicht eingebauter Dichtplatte 40 ist ein Schnurdurchmesser der O-Ringe 42 größer als die Dichtplatte 40 dick ist.

Zur Messung der elektrischen Widerstandswerte der Dehnmeßstreifen 24, 25 und zur Ermittlung des in den Sacklöchern 20 herrschenden Drucks aus den Widerstandswerten sind die Anschlußkontakte 28 der Dehnmeßstreifen-Meßbrücken 24, 25 mit Dickdrahtbonden 44, also mit Aluminiumdrähten, die durch Reibschweißung an den Anschlußkontakten 28 angebracht sind, mit einer Auswerteschaltung 46 verbunden. Die Auswerteschaltung 46 ist auf einem flachen Träger 48 angebracht, der in Draufsicht die Form eines Doppel-T aufweist und mit seinem Steg mit geringem Abstand oberhalb der Sensorenplatte 30 verlaufend mit dem Hydraulikblock 34 verschraubt ist. Die Anschlußkontakte 28 befinden sich frei zugänglich dicht neben einem Rand des Trägers 48 auf der Sensorenplatte 30. Dies gilt auch bei Verwendung der runden, in Figur 1 dargestellten Sensorenplatte 12, bei der die Anschlußkontakte jeweils dreier Meßmembranen 18 auf einer Geraden angeordnet sind. Die Auswerteschaltung 46 befindet sich im Zentrum der sechs Meßmembranen 18, so daß sich kurze, und vorzugsweise gleich lange, elektrische Verbindungsstrecken von den Dehnmeßstreifen 24, 25 zur Auswerteschaltung 46 ergeben. Dies ermöglicht genaue Druckmessungen mit kleinsten Meßfehlern.

Die Auswerteschaltung 46 kann die Widerstandswerte der Dehnmeßstreifen 24, 25 aller sechs Meßmembranen 18 getrennt auswerten. Bei einer Ausführungsform der Erfindung werden die Widerstandswerte der Dehnmeßstreifen 24, 25 der Meßmembranen 18 nacheinander im Multiplexbetrieb gemessen und ausgewertet, so daß also die Widerstandswerte aller sechs Meßmembranen 18 von denselben elektronischen Bauelementen ausgewertet werden. Dadurch werden unterschiedliche Meßergebnisse bei gleichen Druckverhältnissen an verschiedenen Meßmembranen 18 vermieden.

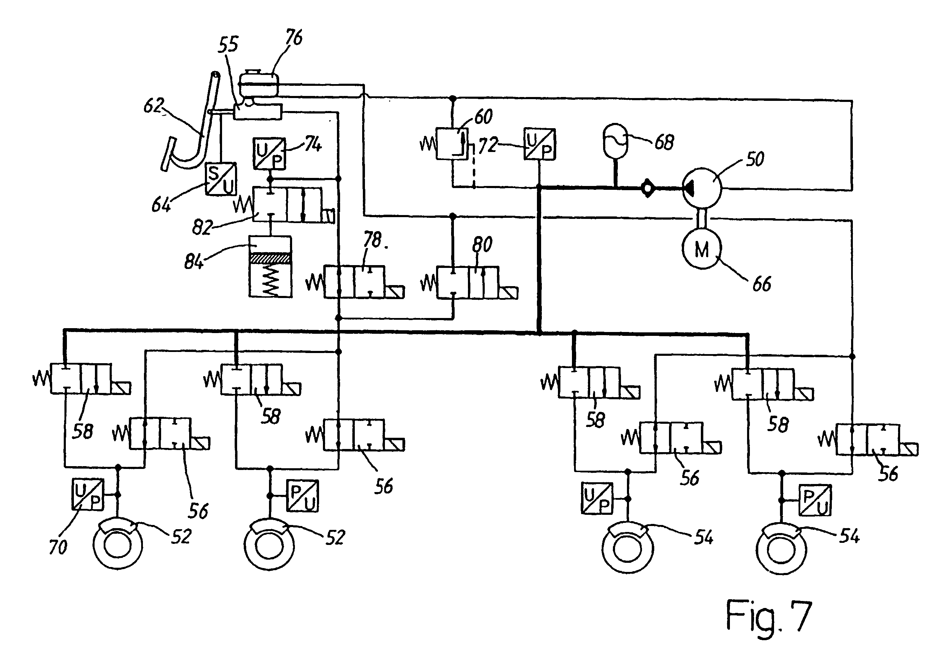

In Figur 7 ist eine erfindungsgemäße, hydraulische Fahrzeugbremsanlage unter Verwendung der beschriebenen Druckmeßvorrichtung dargestellt. Die Fahrzeugbremsanlage weist zwei einander ergänzende Bremssysteme auf, nämlich eine Betriebsbremsanlage, die Bremsflüssigkeitsdruck mittels einer Hydropumpe 50 erzeugt und die auf Radbremszylinder 52, 54 sämtlicher Fahrzeugräder wirkt, und einer Hilfsbremsanlage, die ihren Bremsflüssigkeitsdruck aus einem pedalbetätigten Hauptbremszylinder 55 bezieht, der nur auf die Radbremszylinder 52 zweier Fahrzeugräder einer Achse wirkt.

Jeder Radbremszylinder 52, 54 weist ein in der Grundstellung geöffnetes, erstes Absperrventil 56 und ein in der Grundstellung geschlossenes, zweites Absperrventil 58 auf.

Bei Betätigung eines Bremspedals 62 des Hauptbremszylinders 55 geben ein Pedalstellungssensor 64 und ein Drucksensor 74 ein elektrisches Signal an eine nicht dargestellte Steuerschaltung für die Bremsanlage, die sämtliche Ventile sowie einen elektrischen Pumpenmotor 66 der erfindungsgemäßen Fahrzeugbremsanlage steuert. Die zweiten Absperrventile 58 werden geöffnet und auf diese Weise die Radbremszylinder 52, 54 mit Druck aus einem Hydraulikspeicher 68 beaufschlagt, der seinerseits von der Hydropumpe 50 unter Druck gesetzt wird, so daß auch unter Druck stehende Bremsflüssigkeit vorhanden ist, wenn die Hydropumpe 50 nicht in Betrieb ist. Der Druck im Hydraulikspeicher 68 wird von einem Drucksensor 72 überwacht. Ein Druckbegrenzungsventil 60 schützt den Hydraulikspeicher 68 vor Überlastung. Bei Erreichen eines Bremsflüssigkeitsdrucks in den Radbremszylindern 52, 54, der von dem mit dem Hauptbremszylinder 55 erzeugten Druck abhängig ist, werden die zweiten Absperrventile 58 geschlossen. Die ersten Absperrventile 56 sind in diesem Fall geschlossen, damit keine Bremsflüssigkeit durch sie aus den Radbremszylindern 52, 54 während des Bremsens mit der Betriebsbremsanlage entweichen kann.

Der Bremsflüssigkeitsdruck in den Radbremszylindern 52, 54, im Hauptbremszylinder 55 und im Hydraulikspeicher 68 wird den Meßmembranen 18 durch Leitungen und die Fluidkanäle 38 im Hydraulikblock 34 zugeführt. Die Meßmembranen 18 bilden mit den auf sie aufgebrachten Dehnmeßstreifen 24, 25 und der Auswerteschaltung 46 Drucksensoren 70, 72, 74. Ihr Signal wird der Steuerschaltung der erfindungsgemäßen Fahrzeugbremsanlage zugeführt.

Ist der Bremsflüssigkeitsdruck in den Radbremszylindern 52, 54 höher als es dem mit dem Hauptbremszylinder 55 erzeugten und mit dem Drucksensor 74 gemessenen Druck entspricht, wird Bremsflüssigkeitsdruck durch Öffnen der ersten Absperrventile 56 in den Radbremszylindern 52 abgebaut, es fließt Bremsflüssigkeit in einen Vorratsbehälter 76 des Hauptbremszylinders 55.

Sofern bei einer Störung der Betriebsbremsanlage im Hydrospeicher 58 kein ausreichender Bremsdruck herrscht, bleiben bei Betätigung des Bremspedals 62 die ersten Absperrventile 56 aller vier Radbremszylinder 52, 54 geöffnet und die zweiten Absperrventile 58 geschlossen. Die beiden Radbremszylinder 52, die an die Hilfsbremsanlage angeschlossen sind, werden vom Hauptbremszylinder 55 durch ein Hauptbremszylinder-Absperrventil 78 hindurch mit Druck beaufschlagt, das in seiner Grundstellung geöffnet ist und bei Benutzung der Betriebsbremsanlage geschlossen wird und dann den Hauptbremszylinder 55 von den Radbremszylindern 52, 54 und der Betriebsbremsanlage trennt.

Bei Benutzung der Betriebsbremsanlage wird ein Rücklaufventil 80, das in seiner Grundstellung geschlossen ist, geöffnet. Durch das geöffnetet Rücklaufventil 80 kann Bremsflüssigkeit aus den beiden, an die Hilfsbremsanlage angeschlossenen Radbremszylindern 52 in den Vorratsbehälter 76 des Hauptbremszylinders 55 zurückströmen, wenn die ersten Absperrventile 56 geöffnet werden. Bei Benutzung der Hilfsbremsanlage verhindert das geschlossene Rücklaufventil ein Rückströmen von Bremsflüssigkeit aus dem Hauptbremszylinder 55 in den Vorratsbehälter 76.

An den Hauptbremszylinder 55 ist über ein Absperrventil 82, das in seiner Grundstellung geschlossen ist, ein an sich bekannter Wegsimulator 84 angeschlossen, der in an sich bekannter Weise Bremsflüssigkeit in Abhängigkeit vom Druck aufnehmen kann, um einem Fahrer bei Benutzung der Betriebsbremsanlage und Sperrung der vom Hauptbremszylinder 55 betätigten Hilfsbremsanlage das übliche Bremspedalgefühl zu vermitteln, bei dem das Bremspedal 62 abhängig von der aufgebrachten Fußkraft nachgibt.

## Patentansprüche

1. Vorrichtung zum Messen mehrerer Fluiddrücke, **dadurch gekennzeichnet, daß** sie eine Sensorenplatte (12, 30) mit mehreren Meßmembranen (18) aufweist, die durch Fluidkanäle (38) eines Bauteils (34), an dem die Sensorenplatte (12, 30) anbringbar ist, von einer Seite mit dem zu messenden Fluid beaufschlagbar sind, daß die Meßmembranen (18) nach Art einer Matrix verteilt auf der Sensorenplatte (12, 30) angeordnet sind, und daß die Sensorenplatte (12, 30) Befestigungseinrichtungen (14, 16, 32) zum Anbringen an dem Bauteil (34) aufweist, die nach Art einer Matrix so auf der Sensorenplatte (12, 30) verteilt angeordnet sind, daß sich jeweils in der Mitte zwischen einer gleichen Anzahl von Befestigungseinrichtungen (14, 16, 32) eine Meßmembran (18) befindet.

2. Vorrichtung nach Anspruch 1, **dadurch gekennzeichnet, daß** die Meßmembranen (18) als Stirnwände von Sacklöchern (20) in der Sensorenplatte (12, 30) ausgebildet sind.

3. Vorrichtung nach Anspruch 1 oder 2, **dadurch gekennzeichnet, daß** die Meßmembranen (18) einstückig mit der Sensorenplatte (12, 30) sind.

4. Vorrichtung nach einem der Ansprüche 1 bis 3, **dadurch gekennzeichnet, daß** an jeder Meßmembran (18) mindestens ein dehnbarer elektrische Widerstand (24, 25) angebracht ist, dessen Länge und damit zugleich sein Widerstandswert sich bei Verformung der Meßmembran (18) ändert.

5. Vorrichtung nach Anspruch 4, **dadurch gekennzeichnet, daß** an jeder Meßmembran (18) vier dehnbare elektrische Widerstände (24, 25) angebracht sind, die zu einer Vollbrückenschaltung miteinander verschaltet sind.

6. Vorrichtung nach Anspruch 5, **dadurch gekennzeichnet, daß** zwei Widerstände (25) in der Mitte einer Meßmembran (18) und die beiden anderen Widerstände (24) einander diametral gegenüber am Umfang der Meßmembran (18) angeordnet sind, wobei Dehnrichtungen der vier Widerstände (24, 25) parallel zu einer Durchmesserlinie durch die beiden äußeren Widerstände (24) verlaufen und wobei jeweils ein äußerer Widerstand (24) mit einem mittleren Widerstand (25) in Reihe geschaltet ist.

7. Vorrichtung nach einem der Ansprüche 4 bis 6, **dadurch gekennzeichnet, daß** sie eine gemeinsame elektronische Auswerteschaltung (46) für die Widerstände (24, 25) aller Meßmembranen (18) der Sensorenplatte (12, 30) aufweist.

8. Vorrichtung nach Anspruch 7, **dadurch gekennzeichnet, daß** die Meßmembranen (18) in der Sensorenplatte (12, 30) von einem flachen Träger (48) für die elektronische Auswerteschaltung (46) übergriffen wird, daß sich Anschlußkontakte (28) der an den Meßmembranen (18) angebrachten elektrischen Widerstände (24, 25) auf der Sensorenplatte (12, 30) frei neben einem Rand des Trägers (48) befinden und mit elektrischen Verbindungsmitteln (44) mit der elektronischen Auswerteschaltung (46) verbunden sind.

9. Vorrichtung nach Anspruch 7 oder 8, **dadurch gekennzeichnet, daß** die Auswerteschaltung (46) im Multiplexbetrieb arbeitet.

10. Vorrichtung nach einem der Ansprüche 2 bis 9, **dadurch gekennzeichnet, daß** zwischen die Sensorenplatte (12, 30) und das die Fluidkanäle (38) aufweisende Bauteil (34) ein flächenförmiges Dichtelement (40) einlegbar ist, das mit ihm einstückige O-Ringe (42), die Mündungen der Sacklöcher (20) in der Sensorenkplatte (12, 30) umschließen und Fluiddurchlaßöffnungen innerhalb der O-Ringe (42) aufweist.

11. Hydraulische Fahrzeugbremsanlage, **dadurch gekennzeichnet, daß** sie eine Vorrichtung zum Messen mehrerer Fluiddrücke nach einem der vorhergehenden Ansprüche zum Messen eines Bremsflüssigkeitsdrucks an verschiedenen Stellen der Fahrzeugbremsanlage aufweist, wobei das Fluidkanäle (38) aufweisende Bauteil ein Hydraulikblock (34) ist.

## Claims

1. Device for measuring a plurality of fluid pressures, **characterized in that** it has a sensor plate (12, 30) with a plurality of measuring diaphragms (18) to which the fluid to be measured can be applied from one side through fluid ducts (38) of a component (34) on which the sensor plate (12, 30) can be mounted, **in that** the measuring diaphragms (18) are arranged distributed in the manner of a matrix on the sensor plate (12, 30) and **in that** the sensor plate (12, 30) has attachment devices (14, 16, 32) for mounting on the component (34), which attachment devices (14, 16, 32) are arranged distributed in the manner of a matrix on the sensor plate (12, 30) in such a way that a measuring diaphragm (18) is located in the centre between an equal number of attachment devices (14, 16, 32).

2. Device according to Claim 1, **characterized in that** the measuring diaphragms (18) are embodied as end walls of blind holes (20) in the sensor plate (12, 30).

3. Device according to Claim 1 or 2, **characterized in that** the measuring diaphragms (18) are integral with the sensor plate (12, 30).

4. Device according to one of Claims 1 to 3,
**characterized in that** at least one extendible electrical resistor (24, 25) is mounted on each measuring diaphragm (18), the length of which electrical resistor (24, 25), and thus at the same time its resistance value, changes when the measuring diaphragm (18) is deformed.

5. Device according to Claim 4, **characterized in that** four extendible electrical resistors (24, 25), which are connected to one another to form a full bridge circuit, are mounted on each measuring diaphragm (18).

6. Device according to Claim 5, **characterized in that** two resistors (25) are arranged in the centre of a measuring diaphragm (18) and the two other resistors (24) are arranged diametrically opposite one another on the circumference of the measuring diaphragm (18), extension directions of the four resistors (24, 25) being parallel to a diameter line through the two outer resistors (24), and in each case one outer resistor (24) being connected in series with a central resistor (25).

7. Device according to one of Claims 4 to 6, **characterized in that** it has a common electronic evaluation circuit (46) for the resistors (24, 25) of all the measuring diaphragms (18) of the sensor plate (12, 30).

8. Device according to Claim 7, **characterized in that** a flat carrier (48) for the electronic evaluation circuit (46) engages over the measuring diaphragms (18) in the sensor plate (12, 30), **in that** connection contacts (28) of the electrical resistors (24, 25) which are mounted on the measuring diaphragms (18) are located on the sensor plate (12, 30), freely next to an edge of the carrier (48), and are connected to the electronic evaluation circuit (46) using electrical connecting means (44).

9. Device according to Claim 7 or 8, **characterized in that** the evaluation circuit (46) operates in multiplex mode.

10. Device according to one of Claims 2 to 9, **characterized in that** a planar sealing element (40) can be inserted between the sensor plate (12, 30) and the component (34) which has the fluid ducts (38), which sealing element (40) has O rings which are integral therewith and which surround openings in the blind holes (20) in the sensor plate (12, 30), and fluid passage openings within the O rings (42).

11. Hydraulic vehicle brake system, **characterized in that** it has a device for measuring a plurality of fluid pressures according to one of the preceding claims, for measuring a brake fluid pressure at various points on the vehicle brake system, the component which has the fluid ducts (38) being a hydraulic block (34).

## Revendications

1. Dispositif pour mesurer plusieurs pressions de fluide,
**caractérisé en ce qu'**
- il comprend une plaque à capteurs (12, 30) comportant plusieurs membranes de mesure (18) dont une face est sollicitée par le fluide à mesurer, traversant les canaux à fluide (38) d'un composant (34) sur lequel est installée la plaque de capteurs (12, 30),
- les membranes de mesure (18) sont réparties suivant une matrice sur la plaque de capteurs (12, 30) et,
- la plaque de capteurs (12, 30) comporte des installations de fixation (14, 16, 32) pour le montage sur le composant (34), ces installations étant réparties sur la plaque de capteurs (12, 30) à la manière d'une matrice et chaque fois au milieu entre un nombre égal d'installations de fixation (14, 16, 32), on a une membrane de mesure (18).

2. Dispositif selon la revendication 1,
**caractérisé en ce que**
les membranes de mesure (18) sont les faces frontales de perçages borgnes (20) réalisés dans la plaque de capteurs (12, 30).

3. Dispositif selon l'une quelconque des revendications 1 ou 2,
**caractérisé en ce que**
les membranes de mesure (18) font corps avec la plaque de capteurs (12, 30).

4. Dispositif selon l'une quelconque des revendications 1 à 3,
**caractérisé en ce que**
chaque membrane de mesure (18) comporte au moins une résistance électrique (24, 25) extensible, dont la longueur et ainsi en même temps la valeur de la résistance, changent en cas de déformation de la membrane de mesure (18).

5. Dispositif selon la revendication 4,
**caractérisé en ce que**
chaque membrane de mesure (18) comporte quatre résistances électriques extensibles (24, 25) combinées pour former un montage en pont complet.

6. Dispositif selon la revendication 5,
**caractérisé en ce que**
deux résistances (25) sont prévues au milieu d'une membrane de mesure (18) et les deux autres résistances (24) sont diamétralement opposées à la périphérie de la membrane de mesure (18),
les directions d'extension des quatre résistances (24, 25) sont parallèles à une ligne diamétrale passant par les deux résistances extérieures (24) et chaque fois une résistance extérieure (24) est branchée en série avec une résistance centrale (25).

7. Dispositif selon l'une quelconque des revendications 4 à 6,
**caractérisé en ce qu'**
il comporte un circuit de traitement électronique commun (46) pour les résistances (24, 25) de toutes les membranes (18) d'une plaque de capteurs (12, 30).

8. Dispositif selon la revendication 7,
**caractérisé en ce que**
les membranes de mesure (18) d'une plaque de capteurs (12, 30) sont recouvertes par un support plat (48) pour le circuit de traitement électronique (46),
les contacts de branchement (28) des résistances électriques (24, 25) installés sur les membranes (18) se trouvent sur la plaque de capteurs (12, 30), librement à côté du bord du support (48) et ils sont reliés par des moyens de liaison électriques (44) avec le circuit de traitement électronique (46).

9. Dispositif selon l'une quelconque des revendications 7 ou 8,
**caractérisé en ce que**
le circuit de traitement (46) fonctionne en mode multiplex.

10. Dispositif selon l'une quelconque des revendications 2 à 9,
**caractérisé en ce qu'**
entre la plaque de capteurs (12, 30) et le composant (34)à muni des canaux à fluide (38), est interposé un élément d'étanchéité (40), plat, qui entoure avec le joint torique (42), faisant corps avec l'élément d'étanchéité, les embouchures des perçages borgnes (20) de la plaque de capteurs (12, 30), et comporte des orifices de passage de fluide à l'intérieur des joints toriques (42).

11. Installation de freinage de véhicule, hydraulique,
**caractérisée en ce qu'**
elle comporte un dispositif de mesure de plusieurs pressions de fluide selon l'une quelconque des revendications précédentes, pour mesurer une pression de fluide de frein en différents endroits de l'installation de freinage du véhicule, le composant muni des canaux à fluide (38) étant un bloc hydraulique (34).
